# EUROPEAN PATENT APPLICATION

(11) **EP 4 585 404 A1**
(43) Date of publication of application: **16.07.2025**
(21) Application number: 24215045.6
(22) Date of filing: 25.11.2024
(51) Int. Cl.: B29C 73/16, B60C 19/12, B29L 30/00

(54) **SEALANT COMPOSITION AND PNEUMATIC TIRE**

(30) Priority: 11.01.2024 JP 2024002229
(71) Applicant: Toyo Tire Corporation, Itami-shi, Hyogo 664-0847 (JP)
(72) Inventor: KIMURA, Takuya, Itami-shi, Hyogo, 664-0847 (JP)
(74) Representative: Ricker, Mathias

(57) **Abstract**

A sealant composition according to an embodiment includes, per 100 parts by mass of a solid rubber component containing a diene rubber, 95 to 150 parts by mass of a hydrocarbon resin, 20 to 100 parts by mass of a liquid plasticizer, and 0.05 to 1.5 parts by mass of sulfur. A crosslinked product of the sealant composition has a dynamic storage shear modulus G' of 10 to 50 kPa as measured under the conditions of a temperature of 40°C, a frequency of 1.0 Hz, and a strain of 25%.

## Description

### BACKGROUND OF THE INVENTION

### 1. Field of the Invention

The present invention relates to a sealant composition and also to a pneumatic tire using the same.

### 2. Description of Related Art

As a pneumatic tire with an anti-puncture function, a tire having a sealant layer placed on its inner surface is known. In a tire provided with a sealant layer, when a foreign object such as a nail pierces the tread, and a through hole is formed, the sealant layer automatically closes the through hole to prevent air from leaking from the tire. A sealant layer can be formed, for example, by ejecting a sealant composition from the nozzle of an applicator and applying the same to the tire inner surface.

As such a sealant composition, for example, JP2011-529972A describes one containing an unsaturated diene elastomer, 30 phr to 90 phr of a hydrocarbon resin, 0 phr to 60 phr of a liquid plasticizer whose Tg is lower than -20°C, and 0 to less than 30 phr of a filler. However, the sealant composition described in JP2011-529972A is highly viscous at the temperature of application and puts a load on the applicator. Thus, there is a need to suppress the application speed.

For improving the application speed, JP2023-089834A discloses that the content of hydrocarbon resin is increased. Specifically, 95 to 150 parts by mass of a hydrocarbon resin, 20 to 60 parts by mass of a liquid plasticizer, and a specific filler are incorporated per 100 parts by mass of a solid rubber component.

### SUMMARY OF THE INVENTION

Tires having a sealant layer formed thereon by an applicator are generally stored in a stationary state at normal temperature. At this time, when the sealant layer is too soft, in the stationary state, the sealant layer may flow and deform. Therefore, the sealant layer is required to have shape retention. Meanwhile, in the case where a foreign object such as a nail pierces the tread, it may happen that the foreign object is not immediately pulled out and left in the piercing state. In that case, cracks may be formed in the sealant layer over time, resulting in air leakage. Therefore, there is a demand for improving the sealing properties against such air leakage over time.

In light of the above points, an object of an embodiment of the invention is to provide a sealant composition capable of forming a sealant layer that is excellent in shape retention and sealing properties.

The invention includes the following embodiments.
[1] A sealant composition including, per 100 parts by mass of a solid rubber component containing a diene rubber, 95 to 150 parts by mass of a hydrocarbon resin, 20 to 100 parts by mass of a liquid plasticizer, and 0.05 to 1.5 parts by mass of sulfur, in which a crosslinked product of the sealant composition has a dynamic storage shear modulus G' of 10 to 50 kPa as measured under the conditions of a temperature of 40°C, a frequency of 1.0 Hz, and a strain of 25%.
[2] The sealant composition according to [1], in which the solid rubber component contains at least one member selected from the group consisting of natural rubber, synthetic polyisoprene, polybutadiene, butadiene copolymer, and isoprene copolymer.
[3] The sealant composition according to [1] or [2], in which 100 parts by mass of the solid rubber component contains 40 to 100 parts by mass of natural rubber and/or synthetic polyisoprene and 0 to 60 parts by mass of polybutadiene.
[4] The sealant composition according to any one of [1] to [3], in which the hydrocarbon resin contains at least one member selected from the group consisting of petroleum resin, styrene-based resin, and terpene-based resin.
[5] The sealant composition according to any one of [1] to [4], in which the liquid plasticizer contains an oil and/or a liquid rubber.
[6] A pneumatic tire comprising a sealant layer formed from the sealant composition according to any one of [1] to [5].

According to an embodiment of the invention, a sealant layer that is excellent in shape retention and sealing properties can be formed.

### BRIEF DESCRIPTION OF THE DRAWINGS

FIG. 1 is a cross-sectional view of a pneumatic tire according to one embodiment; and
FIG. 2 is a schematic diagram of a die of an apparatus for measuring the dynamic storage shear modulus G'.

### DESCRIPTION OF EMBODIMENTS

A sealant composition according to this embodiment includes, per 100 parts by mass of a solid rubber component containing a diene rubber, 95 to 150 parts by mass of a hydrocarbon resin, 20 to 100 parts by mass of a liquid plasticizer, and 0.05 to 1.5 parts by mass of sulfur, in which a crosslinked product of the sealant composition has a dynamic storage shear modulus G' of 10 to 50 kPa as measured under the conditions of a temperature of 40°C, a frequency of 1.0 Hz, and a strain of 25%. In addition to the combination of such specific components, as a result of the dynamic storage shear modulus G' at 40°C being 10 kPa or more, the flow deformation of the sealant layer is suppressed, and the shape retention can be improved. In addition, as a result of the dynamic storage shear modulus G' being 50 kPa or less, the formation of cracks over time is suppressed, and air leakage is suppressed, that is, the sealing properties can be improved. More specifically, presumably, with the flow being suppressed by crosslinking with a small amount of sulfur, the combination of a hydrocarbon resin and a liquid plasticizer provides the sealant layer with moderate softness, whereby the sealing properties can be improved. Incidentally, "sealing properties" refers to the performance of automatically closing through holes to prevent air from leaking from the tire, and, in this embodiment, refers to the performance of suppressing the air leakage over time as above.

In this embodiment, the solid rubber component contains a diene rubber. The solid rubber component preferably contains a diene rubber as a main component. The proportion of the diene rubber contained in 100 mass% of the solid rubber component is preferably 50 mass% or more, more preferably 80 mass% or more, and still more preferably 90 mass% or more, and may also be 100 mass%. As used herein, "solid" refers to not having fluidity at 23°C.

A diene rubber refers to a rubber with a repeating unit corresponding to a diene monomer having a conjugated double bond. As diene rubbers for the solid rubber component, for example, natural rubber (NR), synthetic polyisoprene (isoprene rubber; IR), polybutadiene (butadiene rubber; BR), butadiene copolymers, isoprene copolymers, and the like can be mentioned. One of them may be used alone, and it is also possible to use two or more kinds together. The concept of these diene rubbers also encompasses those modified at the terminal or backbone as necessary.

Here, a butadiene copolymer is a copolymer of butadiene and other monomers, and, for example, styrene-butadiene rubber (SBR), butadiene-isoprene copolymer rubber, styrene-butadiene-isoprene copolymer rubber, and the like can be mentioned. An isoprene copolymer is a copolymer rubber of isoprene and other monomers, and, for example, styreneisoprene copolymer rubber, butadiene-isoprene copolymer rubber, styrene-butadiene-isoprene copolymer rubber, and the like can be mentioned. Incidentally, a copolymer rubber containing both isoprene and butadiene as monomers is encompassed by copolymers of the monomer whose molar proportion is higher. That is, when the molar proportion of butadiene is higher than that of isoprene, such a copolymer is encompassed by butadiene copolymers, while when the molar proportion of isoprene is higher than that of butadiene, such a copolymer is encompassed by isoprene copolymers.

In one embodiment, it is preferable that 100 parts by mass of the solid rubber component contains 40 to 100 parts by mass of natural rubber and/or polyisoprene and 0 to 60 parts by mass of polybutadiene. Here, polybutadiene may be 0 parts by mass. It is also possible that 100 parts by mass of the solid rubber component contains 50 to 80 parts by mass of natural rubber and/or polyisoprene and 20 to 50 parts by mass of polybutadiene.

The solid rubber component may contain a solid rubber other than diene rubbers. As such non-diene rubbers, for example, butyl rubber, halogenated butyl rubber, ethylene propylene rubber, and the like can be mentioned.

A hydrocarbon resin is a polymer based essentially on carbon and hydrogen. As a hydrocarbon resin, a solid thermoplastic resin having no fluidity at 23°C is preferably used. The hydrocarbon resin may be aliphatic, alicyclic, or aromatic, or may also be a combination of them, for example, an aliphatic/aromatic resin. The hydrocarbon resin may be a petroleum resin, or may also be a non-petroleum natural resin or synthetic resin.

As preferred examples of hydrocarbon resins, petroleum resins, styrene-based resins, and terpene-based resins can be mentioned. One of them may be used alone, and it is also possible to use two or more kinds together. In one embodiment, it is preferable that the hydrocarbon resin contains 60 mass% or more, more preferably 80 mass% or more, and still more preferably 90 mass% or more, of at least one member selected from the group consisting of petroleum resin, styrene-based resin, and terpene-based resin, and the content may also be 100 mass%.

A petroleum resin is a resin obtained by polymerizing a petroleum fraction, and, for example, C5-based aliphatic petroleum resins, C9-based aromatic petroleum resins, and C5/C9-based aliphatic/aromatic copolymerized petroleum resins can be mentioned. One of them may be used alone, and it is also possible to use two or more kinds together. An aliphatic petroleum resin is a resin obtained by polymerizing a petroleum fraction equivalent to 4 to 5 carbon atoms (C5 fraction), and may be hydrogenated. An aromatic petroleum resin is a resin obtained by polymerizing a petroleum fraction equivalent to 8 to 10 carbon atoms (C9 fraction), and may be hydrogenated. An aliphatic/aromatic copolymerized petroleum resin is a resin obtained by copolymerizing a C5 fraction and a C9 fraction, and may be hydrogenated.

A styrene-based resin (styrene-based hydrocarbon resin) is a resin obtained by polymerizing a styrene-based monomer, such as styrene or its derivative (e.g., α-methylstyrene, vinyltoluene, 4-tert-butylstyrene, etc.), and may also be a copolymer of a styrene-based monomer and other aromatic or aliphatic monomers. As styrene-based resins, for example, styrene/α-methylstyrene copolymers, α-methylstyrene homopolymers, styrene/aliphatic monomer copolymers, α-methylstyrene/aliphatic monomer copolymers, styrene/α-methylstyrene/aliphatic monomer copolymers, and the like can be mentioned. One of them may be used alone, and it is also possible to use two or more kinds together.

A terpene-based resin (terpene-based hydrocarbon resin) is a resin obtained by polymerizing a terpene compound and has a unit derived from a terpene compound. As terpene compounds, for example, α-pinene, β-pinene, limonene, dipentene, and the like can be mentioned. Examples of terpene-based resins include polyterpene resins obtained by polymerizing a terpene compound alone, as well as modified terpene resins obtained by polymerizing a terpene compound and monomers other than terpene. One of them may be used alone, and it is also possible to use two or more kinds together. As modified terpene resins, for example, aromatic modified terpene resins obtained by polymerizing a terpene compound and an aromatic compound (e.g., terpene-phenol resin) can be mentioned. As the terpene-based resin, it is preferable to use a polyterpene resin, and it is more preferable to use a pinene resin whose main monomers are α-pinene and/or β-pinene.

The softening point of the hydrocarbon resin is not particularly limited, but is preferably 80 to 150°C, and more preferably 80 to 130°C. As used herein, the softening point is a value measured in accordance with ASTM D6090, and, in the Examples, values measured using "DP70" (automatic softening point measuring apparatus) manufactured by METTLER TOLEDO were employed.

The content of hydrocarbon resin is, per 100 parts by mass of the solid rubber component, 95 to 150 parts by mass, preferably 95 to 130 parts by mass, and more preferably 95 to 115 parts by mass. As a result of the content of hydrocarbon resin being 95 parts by mass or more, it becomes easier to reduce the viscosity during application and improve the application speed. In addition, the sealant layer is prevented from becoming too hard, and the sealing properties can be improved. As a result of the content of hydrocarbon resin being 150 parts by mass or less, cracking is less likely to occur in the sealant layer, and the sealing properties can be improved.

A liquid plasticizer refers to a plasticizer that is liquid at 23°C. That is, "liquid" means having fluidity at 23°C. As the liquid plasticizer, it is preferable to use an oil or a liquid rubber, and it is also possible to use an oil and a liquid rubber together. In one embodiment, it is preferable that the liquid plasticizer contains 60 mass% or more, more preferably 80 mass% or more, and still more preferably 90 mass% or more, of an oil and/or a liquid rubber, and the content may also be 100 mass%.

As the oil, any of various oils that are generally incorporated into rubber compositions can be used, and, for example, mineral oils, vegetable oils, polyolefin oils, and the like can be mentioned. A specific example of a preferred oil is a mineral oil containing a hydrocarbon as a main component. For example, it is preferable to use at least one process oil selected from the group consisting of paraffin oil, naphthene oil, and aroma oil.

A liquid rubber is a rubber that is liquid at 23°C. As liquid rubbers, for example, liquid polyisoprene rubber, liquid polybutadiene rubber, liquid styrene butadiene rubber, liquid isoprene butadiene rubber, liquid isoprene styrene rubber, liquid isoprene butadiene styrene rubber, liquid isobutylene, liquid ethylene propylene diene rubber (EPDM), and the like can be mentioned. These liquid rubbers may be modified by carboxylation, methacrylation, or the like. One of these liquid rubbers may be used alone, and it is also possible to use two or more kinds together. As the liquid rubber, a liquid diene rubber is preferably used.

The weight average molecular weight (Mw) of the liquid rubber is not particularly limited, but is generally less than 100,000, and may also be 1,000 to 80,000, or 2,000 to 60,000. Incidentally, the diene rubber (including natural rubber) in the solid rubber component generally has a weight average molecular weight (Mw) of 200,000 or more, and is distinguished from the liquid rubber.

As used herein, the weight average molecular weight (Mw) is a value measured by gel permeation chromatography (GPC). Specifically, Mw is calculated in terms of polystyrene using a commercially available standard polystyrene using, for example, a differential refractive index detector (Rl)-equipped "HLC8320-GPC" manufactured by Tosoh Corporation as the measuring apparatus, tetrahydrofuran (THF) as the solvent, and "TSKgel SuperHZM-M" manufactured by Tosoh Corporation as the column at a measurement temperature of 40°C, a flow rate of 0.35 mL/min, a concentration of 1.0 g/L, and an injection volume of 40 µL.

The content of liquid plasticizer is, per 100 parts by mass of the solid rubber component, 20 to 100 parts by mass, preferably 30 to 80 parts by mass, more preferably 35 to 80 parts by mass, and still more preferably 40 to 70 parts by mass. As a result of the content of liquid plasticizer being 20 parts by mass or more, it becomes easier to reduce the viscosity during application and improve the application speed, and the sealing properties in the sealant layer can also be improved. As a result of the content of liquid plasticizer being 100 parts by mass or less, it becomes easier to ensure the shape retention of the sealant layer.

The sealant composition according to this embodiment incorporates sulfur as a crosslinking agent. Examples of sulfur include powder sulfur, precipitated sulfur, colloidal sulfur, insoluble sulfur, and highly dispersed sulfur.

The content of sulfur is, per 100 parts by mass of the solid rubber component, 0.05 to 1.5 parts by mass, preferably 0.1 to 1.0 part by mass, and more preferably 0.1 to 0.5 parts by mass. As a result of the content of sulfur being 0.05 parts by mass or more, flow deformation of the sealant layer is suppressed by sulfur crosslinking, and the shape retention can be improved. As a result of the content of sulfur being is 1.5 parts by mass or less, the sealant layer is prevented from becoming too hard, and the sealing properties can be improved.

The sealant composition according to this embodiment may incorporate a vulcanization accelerator. As vulcanization accelerators, for example, sulfenamide-based vulcanization accelerators, thiuram-based vulcanization accelerators, thiazole-based vulcanization accelerators, thiourea-based vulcanization accelerators, guanidine-based vulcanization accelerators, dithiocarbamate-based vulcanization accelerators, and the like can be mentioned. Among them, it is preferable to use at least one vulcanization accelerator selected from the group consisting of sulfenamide-based vulcanization accelerator, thiazole-based vulcanization accelerator, and guanidine-based vulcanization accelerator, and it is more preferable to use a sulfenamide-based vulcanization accelerator.

As sulfenamide-based vulcanization accelerators, for example, N-cyclohexyl-2-benzothiazolylsulfenamide (abbreviation: CZ), N-tert-butyl-2-benzothiazolylsulfenamide (abbreviation: NS), N-oxydiethylene-2-benzothiazolylsulfenamide (abbreviation: OBS), and N,N-diisopropyl-2-benzothiazolesulfenamide (abbreviation: DZ) can be mentioned. They may be used alone, and it is also possible to use two or more kinds together.

The content of vulcanization accelerator is not particularly limited and may be, for example, 0.5 to 10 parts by mass, 1 to 5 parts by mass, or 1 to 3 parts by mass per 100 parts by mass of the solid rubber component.

In addition to the above components, the sealant composition according to this embodiment may suitably incorporate various additives such as fillers, zinc oxide, stearic acid, processing aids, softeners, waxes, and anti-aging agents within the usual ranges.

As fillers, carbon black and/or silica can be mentioned. Carbon black is not particularly limited, and known various species can be used. Silica is not particularly limited either, and, for example, wet silica such as wet-precipitated silica or wet-gelled silica can be mentioned. The content of filler is not particularly limited and may be, for example, 0 to 30 parts by mass, or 0 to 20 parts by mass, per 100 parts by mass of the solid rubber component. In one embodiment, the sealant composition may be free of fillers, or, alternatively, may contain carbon black in a small amount just for coloring, for example, in an amount of 0.5 to 8 parts by mass per 100 parts by mass of the solid rubber component.

The content of zinc oxide is not particularly limited and may be, for example, 0 to 10 parts by mass, 0.5 to 5 parts by mass, or 1 to 4 parts by mass per 100 parts by mass of the solid rubber component.

The content of stearic acid is not particularly limited and may be, for example, 0 to 10 parts by mass, 0.5 to 5 parts by mass, or 1 to 4 parts by mass per 100 parts by mass of the solid rubber component.

The sealant composition according to this embodiment can be produced by kneading in the usual manner using a kneading machine commonly used in the rubber industry. For example, in the first step, ingredients excluding a hydrocarbon resin and crosslinking ingredients (sulfur and a vulcanization accelerator) are added to a solid rubber component and kneaded. Next, in the second step, a hydrocarbon resin and crosslinking ingredients are added and kneaded. As a result, a sealant composition is obtained. Incidentally, the sealant composition according to this embodiment may be a crosslinked product crosslinked by the contained sulfur, or may also be an uncrosslinked product before crosslinking. In one embodiment, it is preferable that the sealant composition is uncrosslinked at the stage after discharge from the kneading machine in the second step.

In the first step, for example, a kneading machine such as a Banbury mixer, a roll mill, or a kneading extruder is used. In the first step, a liquid plasticizer is fed into the kneading machine together with a solid rubber component, optionally followed by the addition of ingredients excluding a hydrocarbon resin and crosslinking ingredients, and kneading is performed while increasing the temperature of the kneaded product. The discharge temperature of the kneaded product from the kneading machine in the first step is not particularly limited and may be, for example, 120 to 160°C.

In the second step, for example, a kneading extruder such as a twin-screw kneading extruder or a co-kneader is used. In the second step, a hydrocarbon resin and crosslinking ingredients are fed into the kneading extruder together with the kneaded product obtained in the first step, and kneaded. The discharge temperature of the kneaded product from the kneading machine in the second step is not particularly limited, but is preferably a temperature higher than the softening point of the hydrocarbon resin. As a result, the dispersibility of the hydrocarbon resin can be improved. The discharge temperature in the second step is preferably 80 to 140°C, and more preferably 100 to 130°C.

The sealant composition according to this embodiment has, when measured using a crosslinked product thereof under the conditions of a temperature of 40°C, a frequency of 1.0 Hz, and a strain of 25%, a dynamic storage shear modulus G' of 10 to 50 kPa. In addition to the combination of specific components as above, as a result of the dynamic storage shear modulus G' being 10 kPa or more and 50 kPa or less, the shape retention and sealing properties of the sealant layer can be simultaneously achieved as described above. The dynamic storage shear modulus G' is more preferably 15 to 47 kPa, more preferably 16 to 46 kPa, and still more preferably 20 to 45 kPa.

The dynamic storage shear modulus G' can be set within a range of 10 to 50 kPa by suitably adjusting the kinds and amounts of the above components within the above ranges. For example, G' tends to decrease when using an oil as a liquid plasticizer or increasing the amount thereof, using a butadiene rubber as a diene rubber or increasing the amount thereof, decreasing the amount of sulfur, or incorporating the above specified amount of hydrocarbon resin. G' tends to increase when the opposite is done. Therefore, by adjusting one or more of them, G' can be set within the above numerical range. Incidentally, the dynamic storage shear modulus G' is a value measured from a crosslinked product obtained by heating an uncrosslinked sealant composition at 150°C for 120 minutes, and the measurement method therefor is as described in the section of EXAMPLES.

The sealant composition according to this embodiment can be used to form a sealant layer on the inner surface of a pneumatic tire. As pneumatic tires, pneumatic tires of various sizes for various uses, such as tires for passenger cars and heavy-duty tires for trucks, buses, and the like, can be mentioned.

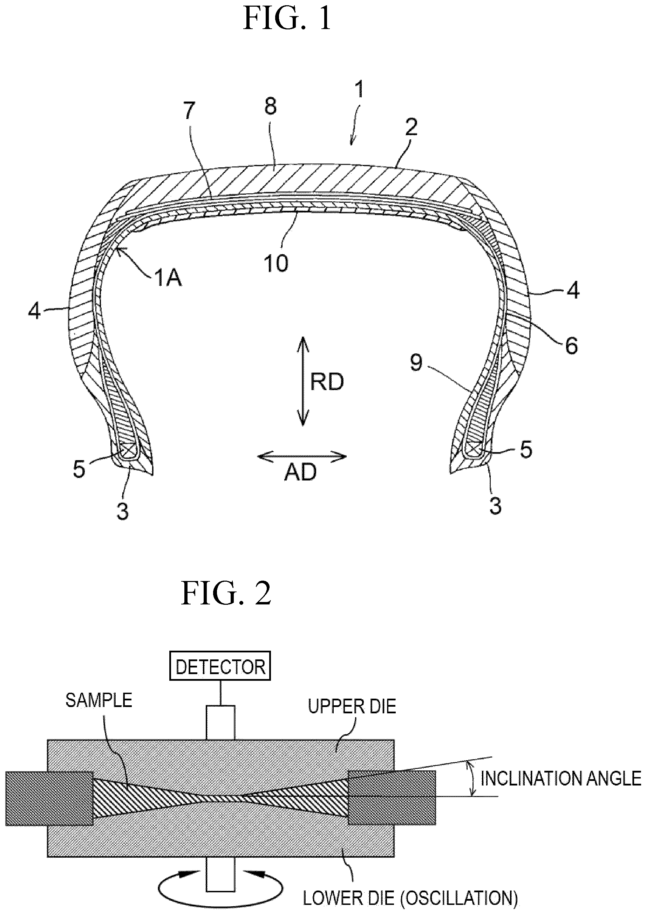

One embodiment of a pneumatic tire having a sealant layer will be described using FIG. 1. The pneumatic tire 1 has an annular tread 2 that comes in contact with the road surface, a pair of left and right bead portions 3,3 located on the inner side in a tire radial direction RD of the tread 2, and a pair of left and right sidewalls 4,4 located between the tread 2 and the bead portions 3,3. The tire 1 includes a bead core 5 embedded in each bead portion 3, a carcass ply 6 toroidally extending between the left and right bead portions 3,3, a belt 7 and a tread rubber 8 provided on the outer circumferential side of the carcass ply 6 in the tread 2, an inner liner 9 provided on the tire inner surface side of the carcass ply 6, and a sealant layer 10 provided on the tire inner surface side of the inner liner 9.

The sealant layer 10 is provided on an inner surface 1A of the pneumatic tire 1, specifically over the inner side of the inner liner 9. In this example, the sealant layer 10 is provided on the tire inner surface 1A in the tread 2 from one end to the other end in a tire axial direction AD. The sealant layer 10 is preferably provided across the entire inner surface of the tread 2 like this, and may be provided only on the inner surface of the tread 2, but may also be provided in a wider area including the inner surface of the tread 2. That is, it is preferable that the sealant layer 10 is provided on the inner surface 1A of the tire 1, including the inner surface of the tread 2.

The method for forming a sealant layer is not particularly limited, but it is favorable that the sealant composition is heated to a temperature higher than the softening point of the hydrocarbon resin (e.g., 80 to 160°C) and applied to the inner surface of a pneumatic tire using an applicator. Specifically, for example, it is possible that an uncrosslinked sealant composition is heated in an applicator and crosslinked, and the crosslinked sealant composition is ejected in strip form from the nozzle of the applicator and applied along the tire circumferential direction while displacing the strip with respect to the tire inner surface in the tire axial direction. The sealant composition after application is left at normal temperature, and, as a result, due to a decrease in its fluidity, the sealant composition settles on the inner surface of the pneumatic tire, forming a sealant layer.

The thickness of the sealant layer is not particularly limited and may be, for example, 3 to 7 mm.

### EXAMPLES

Examples will be shown hereinafter, but the invention is not limited to these examples.

Components used in the examples and comparative examples are as follows.
- IR: "IR2200" manufactured by JSR Corporation
- BR: "UBEPOL BR150B" manufactured by UBE Corporation
- Process oil 1: Aroma oil, "Process NC140" manufactured by ENEOS Corporation
- Process oil 2: Paraffin oil, "Process P200" manufactured by ENEOS Corporation
- Liquid rubber: Liquid polyisoprene rubber, "LIR50" manufactured by Kuraray Co., Ltd.
- Petroleum resin: Aliphatic/aromatic petroleum resin, "Petrotack 90" manufactured by Tosoh Corporation, softening point = 95°C
- Polyterpene resin: Pinene resin, "SYLVATRAXX 4125" manufactured by KRATON Corporation, softening point = 125°C
- Styrene-based resin: α-Methylstyrene-based resin, "SYLVATRAXX 4401" manufactured by KRATON Corporation, softening point = 85°C
- Zinc oxide: "Zinc Oxide, Type 2" manufactured by Mitsui Mining & Smelting Co., Ltd.
- Stearic acid: "LUNAC S20" manufactured by Kao Corporation
- Sulfur: "Powder Sulfur" manufactured by Tsurumi Chemical Industry Co., Ltd.
- Vulcanization accelerator: "SOXINOL CZ" manufactured by Sumitomo Chemical Co., Ltd.

### Examples 1 to 12, Comparative Examples 1 to 8

Sealant compositions of Examples 1 to 12 and Comparative Examples 1 to 8 were prepared according to the formulations (parts by mass) shown in Tables 1 and 2 below. Specifically, first, in the first step, components excluding a hydrocarbon resin and crosslinking ingredients (i.e., sulfur and a vulcanization accelerator) were kneaded using a Banbury mixer (discharge temperature: 100°C). Next, in the second step, a hydrocarbon resin and crosslinking ingredients were added to the kneaded product obtained in the first step and kneaded using a twin-screw kneading extruder, thereby giving a sealant composition. In the second step, the discharge temperature from the twin-screw extruder was set to 130°C, and the kneading time was 3 minutes.

Each obtained sealant composition was measured for the dynamic storage shear modulus G', and also evaluated for the shape retention and sealing properties of the sealant layer. The measurement methods and evaluation methods are as follows.
(1) Dynamic Storage Shear Modulus G': A sealant composition was heated at 150°C for 120 minutes and thus crosslinked. The dynamic storage shear modulus G' of the resulting crosslinked product was measured using "D-RPA 3000" manufactured by Montech Corporation in accordance with ISO6502 under the conditions of a temperature of 40°C, a frequency of 1.0 Hz, and a strain of 25%. Specifically, as shown in FIG. 2, double-cone closed (biconical) dies having conical surfaces disposed to face each other was used. 5 g of the crosslinked product was placed as a sample on the lower die, and the crosslinked product was sandwiched between the lower die and the upper die. The lower die was rotationally oscillated under the conditions of a temperature of 40°C, a frequency of 1.0 Hz, and a strain of 25% to perform a dynamic viscoelasticity test, and the dynamic storage shear modulus G' at 25% strain was determined. Here, the conical surface inclination angle is 3.5833°. The strain percentage is defined as 100 θ/Φ, where Φ is twice the inclination angle, and θ is the oscillation angle of the lower die. Therefore, 25% strain = 100 θ/(2 × 3.5833°), and the oscillation amplitude angle θ of the lower die was set to 1.79165°.
(2) Shape retention: Using a material application system manufactured by Nordson, a sealant composition was heated at 150°C for 120 minutes and then, while being ejected from the nozzle at a pressure of 4.0 × 10⁵ Pa, applied to the inner surface of a pneumatic tire (tire size: 215/55R17) to form a sealant layer having a thickness of 4 mm. The pneumatic tire with the sealant layer formed was stacked flat at normal temperature and, after stationary storage for two weeks, the tire inner surface was observed to see whether the sealant layer had undergone flow deformation. When no flow deformation was observed, "A" (good shape retention) was given, while when flow deformation was observed, "B" (poor shape retention) was given.
(3) Sealing Properties: Using a pneumatic tire provided with a sealant layer prepared in the same manner as in the above evaluation of shape retention, the tire was mounted on a rim and filled with air at an internal pressure of 180 kPa. A nail (diameter: 5.2 mm, length: 50 mm) was allowed to penetrate the tread. After the tire was left stationary as it was for one week, the sealing properties were evaluated based on whether there was leakage of air. When the internal pressure drop was less than 5%, "A" (good sealing properties) was given, while when the internal pressure drop was 5% or more, "B" (poor sealing properties) was given.

**[Table 1]**

| | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 |
|---|---|---|---|---|---|---|---|---|---|---|---|---|
| Formulation (parts by mass) | | | | | | | | | | | | |
| IR | 60 | 80 | 60 | 50 | 50 | 100 | 100 | 80 | 80 | 60 | 80 | 60 |
| BR | 40 | 20 | 40 | 50 | 50 | | | 20 | 20 | 40 | 20 | 40 |
| Process oil 1 | 50 | 50 | | 50 | 100 | 60 | | 60 | 100 | | 40 | 80 |
| Process oil 2 | | | | | | | 60 | | | 30 | | |
| Liquid rubber | | | 50 | | | | | | | | | 20 |
| Petroleum resin | 100 | 100 | 100 | | | 100 | 100 | 120 | 150 | 120 | 100 | 100 |
| Polyterpene resin | | | | | 100 | | | | | | | |
| Styrene-based resin | | | | 100 | | | | | | | | |
| Zinc oxide | 3 | 3 | 3 | 3 | 3 | 3 | 3 | 3 | 3 | 3 | 3 | 3 |
| Stearic acid | 3 | 3 | 3 | 3 | 3 | 3 | 3 | 3 | 3 | 3 | 3 | 3 |
| Sulfur | 0.2 | 0.5 | 0.1 | 0.2 | 1 | 0.5 | 0.5 | 0.2 | 0.5 | 0.2 | 0.05 | 1.5 |
| Vulcanization accelerator | 2 | 2 | 2 | 2 | 2 | 2 | 2 | 2 | 2 | 2 | 2 | 2 |
| G'@40°C (kPa) | 27 | 35 | 37 | 48 | 16 | 30 | 23 | 32 | 40 | 46 | 31 | 24 |
| Evaluation | | | | | | | | | | | | |
| Shape retention | A | A | A | A | A | A | A | A | A | A | A | A |
| Sealing properties | A | A | A | A | A | A | A | A | A | A | A | A |

**[Table 2]**

| | Comp. Ex. 1 | Comp. Ex. 2 | Comp. Ex. 3 | Comp. Ex. 4 | Comp. Ex. 5 | Comp. Ex. 6 | Comp. Ex. 7 | Comp. Ex. 8 |
|---|---|---|---|---|---|---|---|---|
| Formulation (parts by mass) | | | | | | | | |
| IR | 50 | 50 | 80 | 80 | 80 | 80 | 50 | 50 |
| BR | 50 | 50 | 20 | 20 | 20 | 20 | 50 | 50 |
| Process oil 1 | 50 | 50 | 40 | 60 | | 150 | 100 | |
| Process oil 2 | | | | | | | | |
| Liquid rubber | | | | | | | | 30 |
| Petroleum resin | 100 | 100 | 60 | 200 | | | 120 | |
| Polyterpene resin | | | | | 100 | 100 | | |
| Styrene-based resin | | | | | | | | 100 |
| Zinc oxide | 3 | 3 | 3 | 3 | 3 | 3 | 3 | 3 |
| Stearic acid | 3 | 3 | 3 | 3 | 3 | 3 | 3 | 3 |
| Sulfur | | 2 | 0.1 | 1 | 0.2 | 0.2 | 0.2 | 0.2 |
| Vulcanization accelerator | 2 | 2 | 2 | 2 | 2 | 2 | 2 | 2 |
| G'@40°C (kPa) | 22 | 36 | 40 | 58 | 57 | 12 | 9 | 76 |
| Evaluation | | | | | | | | |
| Shape retention | B | A | A | A | A | B | B | A |
| Sealing properties | A | B | B | B | B | A | A | B |

The results are as shown in Tables 1 and 2. In Comparative Example 1, because no sulfur was incorporated, flow deformation of the sealant layer occurred during stationary storage, and the shape retention was inferior. In Comparative Example 2, because the content of sulfur was more than the specified amount, although the shape retention was excellent, cracking occurred in the sealant layer, and the sealing properties were inferior.

In Comparative Example 3, because the amount of hydrocarbon resin was less than specified, the sealant layer was hard at normal temperature, and the sealing properties were inferior. In Comparative Example 4, because the amount of hydrocarbon resin was more than specified, and also the dynamic storage shear modulus G' was more than the upper limit, cracking occurred in the sealant layer, and the sealing properties were inferior.

In Comparative Example 5, because no oil was incorporated, and also the dynamic storage shear modulus G' was more than the upper limit, the sealant layer was hard at normal temperature, and the sealing properties were inferior. In Comparative Example 6, because the amount of oil was more than specified, the shape retention of the sealant layer was inferior.

In Comparative Example 7, although the contents of liquid plasticizer, hydrocarbon resin, and sulfur satisfied the specified amounts, because the dynamic storage shear modulus G' was less than the lower limit, the sealant layer was prone to flow deformation, and the shape retention was inferior. In Comparative Example 8, although the contents of liquid plasticizer, hydrocarbon resin, and sulfur satisfied the specified amounts, because the dynamic storage shear modulus G' was more than the upper limit, cracking occurs in the sealant layer, and the sealing properties were inferior.

In contrast, in each of Examples 1 to 12, the liquid plasticizer, the hydrocarbon resin, and sulfur as a vulcanizing agent were contained in the specified amounts, and also the dynamic storage shear modulus at 40°C was within the specified range. Therefore, flow deformation of the sealant layer was suppressed, resulting in excellent shape retention, and also the formation and growth of cracks over time in the nailing test were suppressed, resulting in excellent sealing properties.

Incidentally, with respect to the various numerical ranges described herein, the upper and lower limits thereof can be arbitrarily combined, and all such combinations are incorporated herein as preferred numerical ranges. In addition, the description of a numerical range "X to Y" means X or more and Y or less.

### Reference Signs List

1: Pneumatic tire
2: Tread
3: Bead portion
4: Sidewall
5: Bead core
6: Carcass ply
7: Belt
8: Tread rubber
9: Inner liner
10: Sealant layer

## Claims

1. A sealant composition comprising, per 100 parts by mass of a solid rubber component containing a diene rubber:
95 to 150 parts by mass of a hydrocarbon resin;
20 to 100 parts by mass of a liquid plasticizer; and
0.05 to 1.5 parts by mass of sulfur, wherein
a crosslinked product of the sealant composition has a dynamic storage shear modulus G' of 10 to 50 kPa as measured under the conditions of a temperature of 40°C, a frequency of 1.0 Hz, and a strain of 25%.

2. The sealant composition according to claim 1, wherein the solid rubber component contains at least one member selected from the group consisting of natural rubber, synthetic polyisoprene, polybutadiene, butadiene copolymer, and isoprene copolymer.

3. The sealant composition according to claim 1 or 2, wherein 100 parts by mass of the solid rubber component contains 40 to 100 parts by mass of natural rubber and/or synthetic polyisoprene and 0 to 60 parts by mass of polybutadiene.

4. The sealant composition according to any one of claims 1 to 3, wherein the hydrocarbon resin contains at least one member selected from the group consisting of petroleum resin, styrene-based resin, and terpene-based resin.

5. The sealant composition according to any one of claims 1 to 4, wherein the hydrocarbon resin has a softening point of 80 to 150°C.

6. The sealant composition according to any one of claims 1 to 5, wherein the liquid plasticizer contains an oil and/or a liquid rubber.

7. A pneumatic tire comprising a sealant layer formed from the sealant composition according to any one of claims 1 to 6.
